# EUROPÄISCHE PATENTSCHRIFT

(11) **EP 0 402 621 B1**
(45) Veröffentlichungstag und Bekanntmachung des Hinweises auf die Patenterteilung: **24.11.1993**
(21) Anmeldenummer: 90108654.6
(22) Anmeldetag: 08.05.1990
(51) Int. Cl.: F16M 11/24

(54) **Geräteträger**
Support for apparatus
Support d'appareils

(30) Priorität: 24.05.1989 DE 3916975
(43) Veröffentlichungstag der Anmeldung: 19.12.1990
(73) Patentinhaber: Kreuzer GmbH + Co. OHG, D-82178 Puchheim (DE)
(72) Erfinder: Kreuzer, Friedhelm, D-8000 München 60 (DE)
(74) Vertreter: Prüfer, Lutz H., Dipl.-Phys.

(56) Entgegenhaltungen:
- CH-A- 573 029
- DE-A- 3 232 131
- DE-A- 3 627 517
- FR-A- 2 474 115
- GB-A- 787 219
- GB-A- 2 133 973
- US-A- 2 481 604
- US-A- 3 286 133

## Beschreibung

Die Erfindung betrifft einen Geräteträger mit einem Arm und einem Träger zum Aufnehmen von Tragelementen für Geräte und mit Zuführungen zum Betreiben von Geräten oder ähnlichem. Derartige Geräteträger werden insbesondere in Form Sogenannter Decken- oder Wandstative zur Aufnahme von medizinischen Geräten verwendet.

Aus der DE-A-34 02 885 ist ein Träger zum Aufnehmen von Tragelementen für Geräte und Zuführungen zum Betreiben von Geräten oder ähnlichem bekannt. Der Träger weist zwei einen Abstand voneinander aufweisende Ständer auf, die jeweils aus je vier Wandungen gebildet sind, die in ihren Ecken mit Schwalbenschwanzverbindungselementen miteinander verbunden sind. Die beiden einander gegenüberliegenden Außenwände der gegenüberliegenden Ständer sind durch als Profilteile ausgebildete Seitenwände realisiert. Die beiden Ständer wiederum sind durch eine Reihe von Metallplatten oder Rahmenplatten ihrerseits miteinander so verbunden, daß die Ständer und die Metallplatten zusammen einen zur Versorgung dienenden Kanal umgeben. An den vier Ecken der Säule sind senkrechte Schienen angebracht, die sich über die ganze Höhe der Versorgungssäule erstrekken und vertikale T-förmige Rinnen aufweisen, in denen Halterungen verstellbar befestigt werden können. In der DE-A-36 27 517 ist ein Geräteträger beziehungsweise Stativ beschrieben, bei dem an Querauslegern Geräteträger in Form von Stativarmen angebracht sind, an denen in einer vorbestimmten Höhe Tragelemente zum Aufnehmen von Geräten vorgesehen sind. Die Geräteträger in Form der Stativarme sind rohrförmig ausgebildet. Im Innern dieser Rohre werden die Versorgungsleitungen geführt, die an einer vorbestimmten Stelle zum Anschluß an die aufzunehmenden Geräte herausgeführt sind. Die Halteelemente sind an den Stativarmen fest angebracht.

Aus der DE-C1-32 32 131 ist ein Geräteträger bekannt, der auf zwei gegenüberliegenden Seiten eine Vielzahl von sich in Längsrichtung des Trägers erstreckenden Nuten aufweist, durch die sich eine Befestigungsmöglichkeit für anzuschließende Bauteile ergibt, die in Längsrichtung verschiebbar sind. Verschiebbare Halteelemente für einhängbare Tragelemente sind dabei nicht vorgesehen.

Aufgabe der Erfindung ist es, einen Geräteträger der eingangs beschriebenen Art und insbesondere in der Form von Stativarmen so auszubilden, daß es leicht möglich ist, an dem Tragelement Halteelemente anzubringen oder abzunehmen bzw. diese in ihrer Höhe relativ zu verstellen.

Diese Aufgabe wird durch den in Patentanspruch 1 gekennzeichneten Geräteträger gelöst.

Weiterbildungen der Erfindung sind in den Unteransprüchen gekennzeichnet.

Weitere Merkmale und Zweckmäßigkeiten der Erfindung werden anhand eines Ausführungsbeispieles unter Bezugnahme auf die Figuren beschrieben. Von den Figuren zeigen:
- Fig. 1: eine schematische Darstellung eines als Stativ ausgebildeten Geräteträgers; und
- Fig. 2: eine Schnittdarstellung entlang der Schnittlinie III-III in vergrößertem Maßstab.

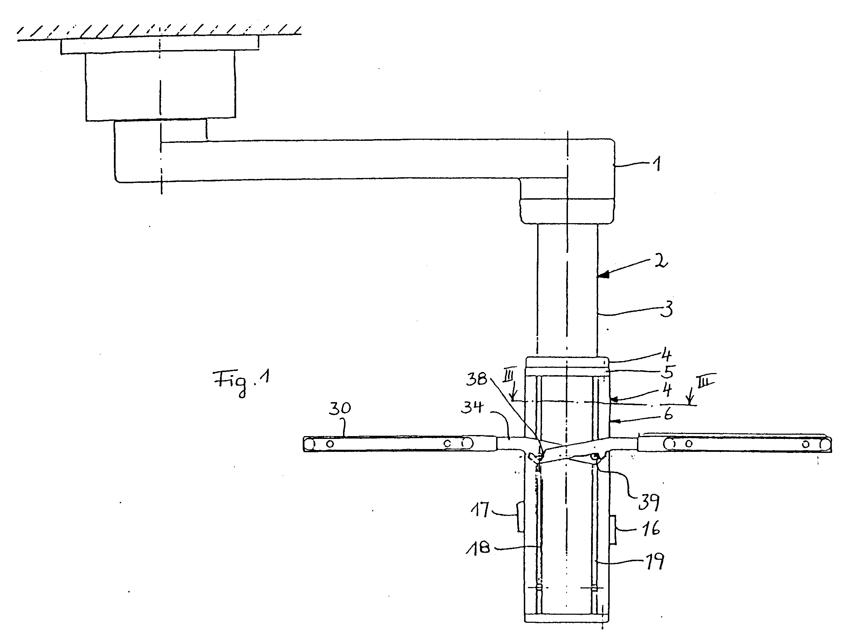

Der in Fig. 1 gezeigte als Stativ ausgebildete Geräteträger weist einen Arm 1 mit einem an diesem getragenen Träger 2 auf. Der Träger 2 weist einen mit dem Stativarm verbundenen säulenförmigen Abschnitt 3 und einen über Flansche 4, 5 mit diesem verbundenen profilförmigen Abschnitt 6 auf.

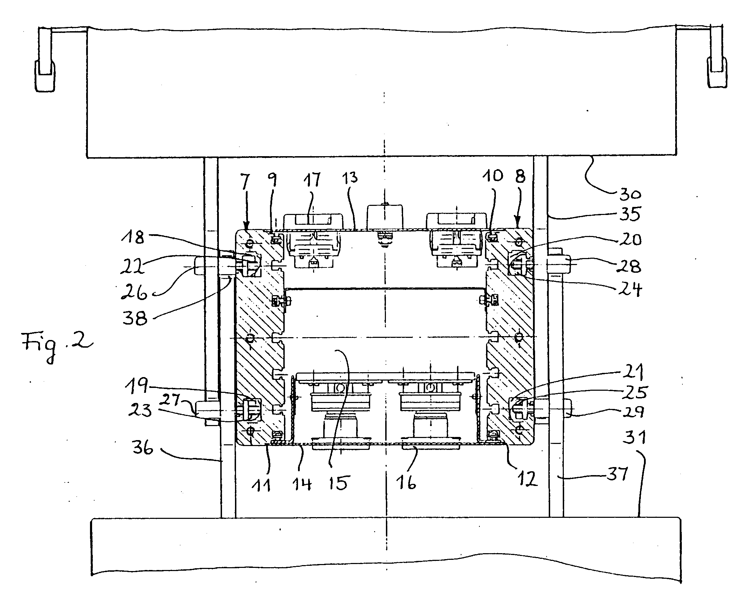

Der profilförmige Abschnitt weist, wie am besten aus Fig. 2 ersichtlich ist, zwei zueinander parallele Profilteile 7, 8 auf.

Die Profilteile 7,8 besitzen an ihren jeweiligen zugewandten Enden der Stirnseiten Ausnehmungen 9 - 12. In diese sind sich quer zu den Profilteilen 7, 8 erstreckende Wandteile 13, 14 eingesetzt und mit den Profilteilen 7, 8 verschraubt, so daß die Profilteile 7, 8 und die Wandteile 13, 14 gemeinsam einen Kanal 15 umschließen, der zum Hindurchführen von Versorgungsleitungen zu in den Wandteilen 13 und 14 angebrachten Anschlüssen 16, 17 dient.

Jedes der Profilteile 7, 8 weist auf seiner Breitseite in einem Abstand voneinander und jeweils nahe zu den Seitenrändern und parallel zu diesen sich erstreckende T-förmige Nuten 18 - 21 auf. Alle vier Nuten laufen parallel zueinander und parallel zur Kanalachse und damit zu der Achse des Trägers selbst.

In jeder der Nuten ist wenigsten eine entlang der Nut verschiebbare Mutter 22 - 25 vorgesehen, die mit einer einen bolzenförmigen Abschnitt aufweisenden Schraube 26 - 29 als Halteelement zusammenwirkt. Durch Lösen der Schraube kann das Halteelement in seiner Höhe entlang der Nut verstellt werden. Auf diese Weise können über die gesamte Länge der Nuten 18, 19 die Halteelemente in der Höhe so eingestellt werden, daß daran anzubringende Tragelemente 30, 31 angesetzt werden können. Jeder der Träger 30, 31 weist an seiner mit dem Träger 2 zu verbindenden Seite ein gabelförmiges Paar Arme 34 - 37 auf. Jeder der Arme 34 - 37 weist an seinem freien Ende auf der Oberseite eine Rille 38 auf, die in ihrer Abmessung so gewählt ist, daß die damit in Eingriff zu bringende Schraube 27 hineinpaßt. In einem dem Abstand der beiden Nuten 18, 19 entsprechenden Abstand weisen die Tragelemente 30, 31 auf ihrer Unterseite eine Ausnehmung 39 auf, die die zugehörige Schraube 26 - 29 aufnimmt. Wie am besten aus Fig. 1 ersichtlich ist, ist das freie Ende des jeweiligen Tragelementes 30, 31 dabei relativ zur Plattform des jeweiligen Tragelementes 30, 31 so geneigt, daß bei horizontaler Anordnung der Plattform die oben liegende Rille 38 und die unten liegende Ausnehmung 39 in einer Ebene parallel zur Plattform liegen.

Im Betrieb werden für jede gewünschte Höhenstellung eines Tragelementes 30, 31 vier Halteelemente in der entsprechenden Höhe arretiert. Anschließend wird die Plattform dadurch befestigt, daß die gabelförmigen Arme 34 - 37 mit ihren freien Enden unter die fernliegenden Haltelemente greifen und mit den der Plattform zugewandten Enden auf dem zweiten Halteelementenpaar aufliegt. Wie aus den Figuren ersichtlich ist, haben die Halteelemente eine solche Abmessung, daß jeweils ein gegenüberliegendes Trägerpaar an diesen angreifen kann.

Wie aus Fig. 2 ersichtlich ist, sind die Ausnehmungen 9 bis 12 ebenfalls als T-förmige Rillen ausgebildet, die sich parallel zur Kanalachse erstrecken, so daß das Anbringen der Wandteile 13, 14 durch in den Nuten versetzbare Schrauben erleichtert wird.

Wie ferner aus Fig. 2 ersichtlich ist, weisen die beiden Profilteile 7 und 8 auch auf ihren einander zugewandten Innenseiten T-förmige Nuten auf, so daß in der Höhe einstellbare Armaturen oder ähnliches auch im Kanalinneren anbringbar sind.

## Patentansprüche

1. Geräteträger mit einem Arm (1) und einem Träger (2) zum Aufnehmen von Tragelementen (30, 31) für Geräte und mit Zuführungen zum Betreiben von Geräten oder ähnlichem,
wobei der Träger (2) eine als Profilteil (7) ausgebildete erste Seitenwand, eine dieser gegenüberliegenden und einen Abstand von der ersten Seitenwand aufweisende und als Profilteil (8) ausgebildete zweite Seitenwand, zwei die Profilteile (7, 8) derart miteinander verbindende Wandteile (13, 14), daß die Profilteile (7, 8) und die Wandteile (13, 14) einen zur Versorgung dienenden Kanal (15) umgeben, aufweist und
das erste und das zweite Profilteil (7, 8) jeweils zwei sich in einem Abstand und parallel zueinander und in Längsrichtung des Trägers (2) erstreckende Nuten (18, 19; 20, 21) zum Aufnehmen von in den jeweiligen Nuten verschiebbaren Halteelementen (26, 27; 28, 29) aufweisen.

2. Geräteträger nach Anspruch 1
dadurch gekennzeichnet, daß die Nuten (18, 19; 20, 21) einen "T"-förmigen Querschnitt aufweisen.

3. Geräteträger nach Anspruch 1 oder 2,
dadurch gekennzeichnet, daß die beiden Profilteile (7, 8) auf ihren einander zugewandten Seiten sich in Längsrichtung des Trägers (2) verstreckende "T"-förmige Nuten zum Befestigen von Armaturen oder ähnlichem aufweisen.

4. Geräteträger nach einem der Ansprüche 1 bis 3,
dadurch gekennzeichnet, daß die zugehörigen Tragelemente (30, 31) gabelförmige Arme (34, 35; 36, 37) aufweisen, die so ausgebildet sind, daß, sie auf den dem Tragelement zugewandten Ende auf den zugehörigen Halteelementen (26, 27; 28, 29) aufliegen und mit dem anderen Gabelende die anderen Halteelemente untergreifen.

5. Geräteträger nach Anspruch 4,
dadurch gekennzeichnet, daß die gabelförmigen Arme (34, 35; 36, 37) so ausgebildet sind, daß jeweils zwei Tragelemente (30, 31) an denselben Halteelementen (26, 27; 28, 29) befestigt werden können.

6. Geräteträger nach einem der Ansprüche 1 bis 5,
dadurch gekennzeichnet, daß die erste Seitenwand (7) und die zweite Seitenwand (8) an ihren jeweiligen einander zugewandten Enden der Stirnseiten Ausnehmungen (9 bis 12) aufweisen, in die die sich quer zum ersten und zweiten Profilteil (7, 8) erstreckenden Wandteile (13, 14) eingesetzt sind.

## Claims

1. A support for apparatus with an arm (1) and a supporting column (2) for receiving supporting elements (30, 31) for instruments, and with supply lines for the operation of instruments or the like,
wherein the supporting column (2) has a first side wall designed as a profiled section (7), a second side wall lying opposite thereto and at a distance therefrom and designed as a profiled section (8), two wall portions (13, 14) interconnecting the profiled sections (7, 8) in such a way that the profiled sections (7, 8) and the wall portions (13, 14) surround a duct (15) serving for supply purposes,
and
the first and the second profiled sections (7, 8) have respectively two grooves (18, 19; 20, 21) extending at a distance from and parallel to each other and in the longitudinal direction of the supporting column (2), for receiving holding elements (26, 27; 28, 29) displaceable in the respective grooves.

2. An apparatus support according to claim 1, characterized in that the grooves (18, 19; 20, 21) have a T-shaped cross-section.

3. An apparatus support according to claim 1 or 2, characterized in that the two profiled sections (7, 8) have, on their sides facing each other, T-shaped grooves extending in the longitudinal direction of the supporting column (2) for securing accessories or the like.

4. An apparatus support according to one of claims 1 to 3, characterized in that the associated supporting elements (30, 31) have fork-shaped arms (34, 35; 36, 37) which are designed in such a way that on the end facing the supporting element, they bear on the associated holding elements (26, 27; 28, 29) and engage with the other fork end under the other holding elements.

5. An apparatus support according to claim 4, characterized in that the fork-shaped arms (34, 35; 36, 37) are designed in such a way that it is possible to secure two supporting elements (30, 31) respectively on the same holding elements (26, 27; 28, 29).

6. An apparatus support according to one of claims 1 to 5, characterized in that the first side wall (7) and the second side wall (8) have recesses (9 to 12) at their respective ends of the front sides facing each other, into which recesses the wall portions (13, 14) extending transversely to the first and second profiled section (7, 8) are inserted

## Revendications

1. Support d'appareils pourvu d'un bras (1) et d'un support (2) destiné à recevoir des éléments porteurs (30,31) pour des appareils et de conduits d'alimentation pour la commande d'appareils ou autres dispositifs similaires, le support (2) présentant une première paroi latérale réalisée sous la forme d'un élément profilé (7), une seconde paroi latérale opposée à la première paroi latérale, présentant un écartement par rapport à celle-ci et réalisée sous la forme d'un élément profilé (8), deux éléments de paroi (13,14) reliant entre eux les éléments profilés (7,8) de telle manière que ces derniers et les éléments de paroi (13,14) entourent un canal (15) servant à l'alimentation, le premier et le second éléments profilés (7,8) présentant chacun deux rainures (18,19;20,21) s'étendant avec un écartement entre elles et parallèlement l'une à l'autre et dans le sens longitudinal du support (2) pour recevoir des éléments de blocage (26,27;28,29) coulissant dans les rainures correspondantes.

2. Support d'appareils selon la revendication 1, caractérisé en ce que les rainures (18,19;20,21) présentent une section transversale en forme de T.

3. Support d'appareils selon la revendication 1 ou 2, caractérisé en ce que les deux éléments profilés (7,8) présentent, sur leurs côtés qui se font face, des rainures en forme de T s'étendant dans le sens longitudinal du support (2) pour la fixation d'armatures ou d'autres éléments semblables.

4. Support d'appareils selon l'une quelconque des revendications 1 à 3, caractérisé en ce que les éléments porteurs (30,31) associés présentent des bras fourchus (34,35;36,37) qui sont conçus de telle manière qu'ils s'appuient sur les éléments de blocage (26,27;28,29) associés sur l'extrémité opposée à l'élément porteur et en ce que, par l'autre extrémité de la fourche, ils soient en prise par dessous avec les autres éléments de blocage.

5. Support d'appareils selon la revendication 4, caractérisé en ce que les bras fourchus (34,35;36,37) sont conçus de telle manière que chaque fois deux éléments porteurs (30,31) peuvent être fixés aux mêmes éléments de blocage (26,27;28,29).

6. Support d'appareils selon l'une quelconque des revendications 1 à 5, caractérisé en ce que la première paroi latérale (7) et la seconde paroi latérale (8) présentent, sur leurs extrémités des côtés frontaux situées face à face, des évidements (9 à 12) dans lesquels sont logés les éléments de paroi (13,14) s'étendant transversalement au premier et au second éléments profilés (7,8).
